# EUROPÄISCHE PATENTSCHRIFT

(11) **EP 0 784 300 B1**
(45) Veröffentlichungstag und Bekanntmachung des Hinweises auf die Patenterteilung: **18.07.2001**
(21) Anmeldenummer: 96106504.2
(22) Anmeldetag: 25.04.1996
(51) Int. Cl.: G07F 7/08, G07F 19/00

(54) **Verfahren zum Abrechnen elektronischer Geldbörsensysteme**
Method of accounting of electronical purses
Méthode de décompte de bourses électroniques

(30) Priorität: 28.12.1995 DE 19548581
(43) Veröffentlichungstag der Anmeldung: 16.07.1997
(73) Patentinhaber: Deutsche Telekom AG, 53113 Bonn (DE)
(72) Erfinder: Hartleif, Siegfried, Ing. (grad.), 64823 Gross-Umstadt (DE); Westphal, Reinhard, 90574 Rosstal (DE)

(56) Entgegenhaltungen:
- EP-A- 0 605 070
- EP-A- 0 644 513
- EP-A- 0 646 898

## Beschreibung

Die Erfindung betrifft ein Verfahren zum Abrechnen elektronischer Geldbörsensysteme auf intelligenten Chipkarten.

Konzepte für das Betreiben von elektronischen Geldbörsen auf Chipkarten befinden sich bereits seit einigen Jahren in der Entwicklung. Sie beinhalten neben der Technik der Chipkarte in den meisten Fällen auch die Sicherheitstechnik für das Zusammenwirken von Chipkarte und Rechner- und Übertragungssystemen sowie die Abrechnung der mit der Chipkarte vorgenommenen Transaktionen. Sowohl national als auch international wurden bereits zahlreiche Konzepte vorgestellt. In einigen Ländern sind bereits elektronische Geldbörsensysteme in Feldversuchen oder gar im Wirkbetrieb eingesetzt, wie zum Beispiel
- Feldversuch Eisenstadt, Österreich seit Dezember 1994
- Avant-Card in Finnland
- Danmont Konzept in Dänemark
- Mondex, in Swindon, England
- Darüberhinaus wird unter CEN TC224 WG10 eine "Intersektor electronic purse" (branchenübergreifende elektronische Geldbörse) standardisiert.

Die Abrechnung erfolgt in den bekannten Systemen nach dem folgenden Verfahren: Der erste Schritt ist das Laden von geldwerten Einheiten in die Chipkarte, wobei der Gegenwert, den der Karteninhaber in bar oder auch bargeldlos bezahlen muß, auf einem sogenannten "Poolkonto" des Börsenbetreibers hinterlegt wird. Bezahlt ein Karteninhaber anschließend mit seiner Chipkarte, werden geldwerte Einheiten aus der elektronischen Geldbörse herausgebucht und mit Hilfe eines Sicherheitsmodules zum Terminal des Serviceanbieters übertragen. Dort werden die eingenommenen geldwerten Einheiten entweder zu einem Betrag akkumuliert und mit dem Börsenbetreiber abgerechnet oder aber jeder einzelne Bezahlvorgang wird beim Börsenbetreiber zur Abrechnung eingereicht. Akkumulierte Beträge oder Einzeldatensätze werden entweder auf einer sogenannten Händlerkarte gesammelt, die der Serviceanbieter einreichen muß oder mit einem entsprechend ausgerüsteten Terminal on-line an eine Abrechnungsstelle übertragen. Außerdem sind ähnliche Systeme und Verfahren durch die US-A-4,859,837, WO-A-90 15 382 und die deutsche Patentanmeldung P 42 43 851.9 bekanntgeworden.

Der Erfindung liegt die Aufgabe zugrunde, ein Verfahren zum Abrechnen elektronischer Geldbörsensysteme in intelligenten Chipkarten zu schaffen, das eine aufwandsarme und somit kostengünstige Lösung zum Abrechnen der Bezahlvorgänge ermöglicht, das den Serviceanbieter von der Tätigkeit des Sammelns und Einreichens entlastet, und das die Einnahmen aus dem Laden der Börsen, die sich auf einem Poolkonto sammeln, möglichst gerecht: und ohne viel administrativen Aufwand auf die dem Börsenkonzept angeschlossenen Serviceanbieter aufgeteilt: werden können.

Die erfindungsgemäße Lösung besteht insbesondere im Kennzeichen des Patentanspruchs 1. Weitere Lösungen und Ausgestaltungen sind in den Kennzeichen der Patentansprüche 2 bis 4 angegeben.

Damit ist die Chipkarte der Kunden zugleich als Speichermedium für die Einnahmen der einzelnen Serviceanbieter zu nutzen. Das wird erreicht, indem für jeden Serviceanbieter, bei dem ein Karteninhaber mit seiner elektronischen Geldbörse bezahlt, in der Chipkarte sozusagen ein Konto angelegt wird. Bezahlt der Kunde mehrmals bei dem selben Serviceanbieter, werden die Bezahlbeträge zu den bereits auf diesem Konto gespeicherten Einnahmen addiert. In Chipkarten mit genügend großer Speicherkapazität und -bereichen wird auch das Ablegen der kompletten Bezahldatensätze eines jeden einzelnen Bezahlvorganges realisiert.

Mit jedem Laden der elektronischen Geldbörse werden die Einnahmen aller angelegten Konten ausgelesen und zum Abrechnungszentrum weitergereicht. Dabei entsteht nur ein Abrechnungsdatensatz, der sowohl die Ladedaten für das Aufladen der Börse, als auch die Einnahmen aller Serviceanbieter enthält, bei denen der Karteninhaber seit dem vorangegangenen Ladevorgang bezahlt hat. Die Abrechnungsdatensätze der geladenen Börsen werden zu einem Abrechnungszentrum weitergeleitet. Das Abrechnungszentrum sorgt dafür, daß die Ladebeträge_vom Bankkonto der Karteninhaber auf ein sogenanntes "Poolkonto" überwiesen werden. Weiterhin bildet es für alle während eines Abrechnungszeitraumes eingegangenen Abrechnungsdatensätze die Summe aller geladenen Beträge (Gesamtladebetrag) und ermittelt die Einnahmen jedes, dem System angeschlossenen Serviceanbieters. Der Gesamtladebetrag wird dann entsprechend den Einnahmen eines jeden Serviceanbieters aufgeteilt, das heißt dem Serviceanbieter mit den höchsten Einnahmen wird der größte prozentuale Anteil vom Gesamtladebetrag als Abschlag zugewiesen. Die Abschlagszahlung des vorangegangenen Abrechnungszeitraumes wird dann den tatsächlichen Einnahmen eines jeden Serviceanbieters im betrachteten Abrechnungszeitraum gegenübergestellt. Ist der Abschlag, den ein Serviceanbieter im vorangegangenen Abrechnungszeitraum bekommen hat, niedriger als die Einnahmen des aktuellen Abrechnungszeitraumes, bekommt er zusätzlich zum Abschlag den Differenzbetrag zugewiesen. Im umgekehrten Fall wird der Abschlag um den Differenzbetrag gekürzt. Durch die laufende Anpassung des Abschlages an die tatsächlich erzielten Einnahmen wird der Differenzbetrag im Laufe der Zeit immer geringer werden.

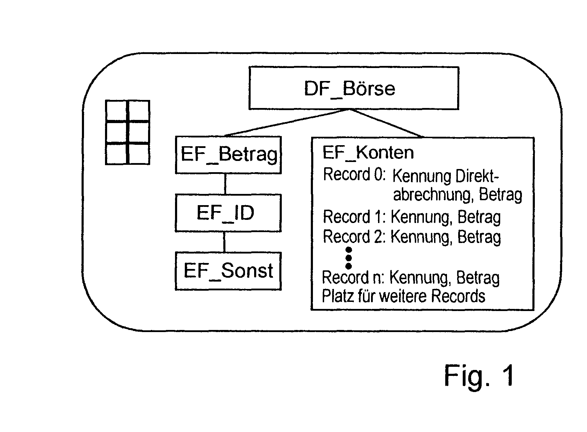

Das Verfahren ist so ausgelegt, daß Serviceanbieter, die eine hundertprozentig genaue und unmittelbare Abrechnung (Direktabrechnung) wünschen, in das oben beschriebene Abrechnungsverfahren integriert werden können. Dabei werden alle Einnahmen, die über Direktabrechnung abgerechnet werden sollen, in der Chipkarte unter einer Kennung für die Direktabrechnung zusammengefaßt (siehe Fig. 1) und beim Laden der Börse mit dem Abrechnungsdatensatz ausgelesen. Nach dem Laden wird das Datenfeld zurückgesetzt.

Serviceanbieter, die die elektronische Geldbörse an ihren Terminals akzeptieren, müssen die beim Bezahlvorgang entstehenden Bezahldatensätze beim Abrechnungszentrum einreichen. Alle nachgewiesenen Einnahmen werden unmittelbar von einem speziellen "Poolkonto für die Direktabrechnung" (Poolkonto 2) auf die Bankkonten der Serviceanbieter überwiesen. Das Abrechnungszentrum sammelt alle während eines Abrechnungszeitraumes für die Direktabrechnung bestimmten Bezahldatensätze und bildet die Summe aller darin enthaltenen Einnahmen. Bei der oben beschriebenen Ermittlung der Abschlagzahlungen an die Serviceanbieter werden die Einnahmen für die Direktabrechnung wie die Einnahmen eines weiteren Serviceanbieters behandelt, das heißt für die Direktabrechnung wird ebenfalls ein Abschlag ermittelt, der dem Poolkonto 2 zugewiesen wird.

Das Verfahren gemäß der erfindungsgemäßen Lösung soll im folgenden anhand eines Ausführungsbeispiels erläutert werden.

In der Zeichnung bedeuten:
- Fig. 1: Aufbau einer elektronischen Geldbörse;
- Fig. 2: Aufbau eines Ladedatensatzes und
- Fig. 3: Darstellung der Serviceanbieter im Abrechnungszentrum.

Grundlage des Verfahrens ist eine Chipkarte mit einer elektronischen Geldbörsenanwendung nach Fig. 1, deren Anordnung der Datenfelder der internationalen Normung entspricht. Die Anwendung ist in einer sogenannten DF-Börse (DF=Dedicated File) im programmierbaren Speicherbereich der Chipkarte angeordnet. Zur Anwendung gehören EF's (Elementary Files), die den aktuellen Betrag (EF-Betrag), die Identifikationsnummer (EF-ID) oder sonstige relevante Daten der Börse (EF-Sonst) enthalten. Erfindungsgemäß gibt es zusätzlich das Datenfeld EF-Konten. Hier werden von der Chipkarte pro Serviceanbieter eigene Records (ein Record entspricht einem Konto) angelegt und verwaltet, die jeweils die Kennung und die Einnahmen des Serviceanbieters beinhalten. Bei jedem Bezahlvorgang am Terminal eines Serviceanbieters liefert das Terminal die Kennung des Serviceanbieters an die Chipkarte. Die Chipkarte überprüft, ob unter dieser Kennung bereits ein Konto angelegt ist. Im Positivfall werden die Einnahmen, die unter dieser Kennung verbucht sind, um den Betrag des Bezahlvorganges erhöht. Existiert noch keine Kennung, legt die Chipkarte unter der vom Terminal des Serviceanbieters empfangenen Kennung ein neues Konto an und verbucht hier den Betrag des Bezahlvorganges als Einnahme. Sollten vor dem nächsten Laden der Börse weitere Bezahlvorgänge bei diesem Serviceanbieter erfolgen, so werden die Einnahmen des Kontos jeweils um die Beträge dieser weiteren Bezahlvorgänge erhöht. Dabei ist es mit dem verfügbaren Speicherplatz der Chipkarte möglich, so viele Konten anzulegen, daß mit einem möglichen Maximalbetrag bei jeweils unterschiedlichen Serviceanbietern kleine Beträge bezahlt werden können. Kann zum Beispiel die Börse mit maximal 100,-- DM geladen werden, so sollte es möglich sein, bei einhundert verschiedenen Serviceanbietern jeweils 1,-- DM auszugeben. Die Chipkarte würde in diesem Fall einhundert verschiedene Konten anlegen.

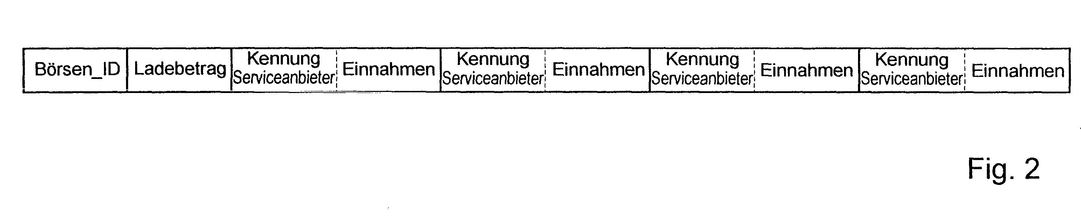

Lädt der Kunde seine elektronische Geldbörse neu auf, so sendet die Chipkarte nach Erhalt des Ladekommandos als Antwort einen sogenannten Ladedatensatz (siehe Fig. 2) an das Ladeterminal. Dieser enthält zum einen den Ladebetrag und die Identifikationsnummer der elektronischen Geldbörse und zum anderen die Beträge und Kennungen der angelegten Konten. Zur Vermeidung von Manipulationen ist der Datensatz mit einem elektronischen Echtheitsstempel versehen. Nach dem Aussenden des Datensatzes setzt die Chipkarte alle Beträge und alle Kennungen wieder zurück. Somit kann der Karteninhaber den geladenen Betrag auch bei gänzlich anderen Serviceanbietern ausgeben, denn es werden ja neue Konten mit neuen Kennungen auf der Chipkarte angelegt.

Der vom Ladeterminal empfangene Ladedatensatz wird an eine Abrechnungszentrale weitergereicht, die einerseits mit dem Börsenbetreiber und andererseits mit den Serviceanbietern abrechnet. Für die Abrechnung mit dem Börsenbetreiber wird aufgrund der Identifikationsnummer der elektronischen Geldbörse aus der Stammdatenverwaltung des Systems die Kontoverbindung des Karteninhabers ermittelt. Danach wird per Lastschrifteinzugsverfahren der Ladebetrag vom Konto des Karteninhabers abgebucht und dem sogenannten Poolkonto des Börsenbetreibers gutgeschrieben. Innerhalb eines Abrechnungszeitraumes (Tag, Woche oder Monat) sammeln sich auf diesem Poolkonto die Ladebeträge aller in diesem Zeitraum geladenen Börsen.

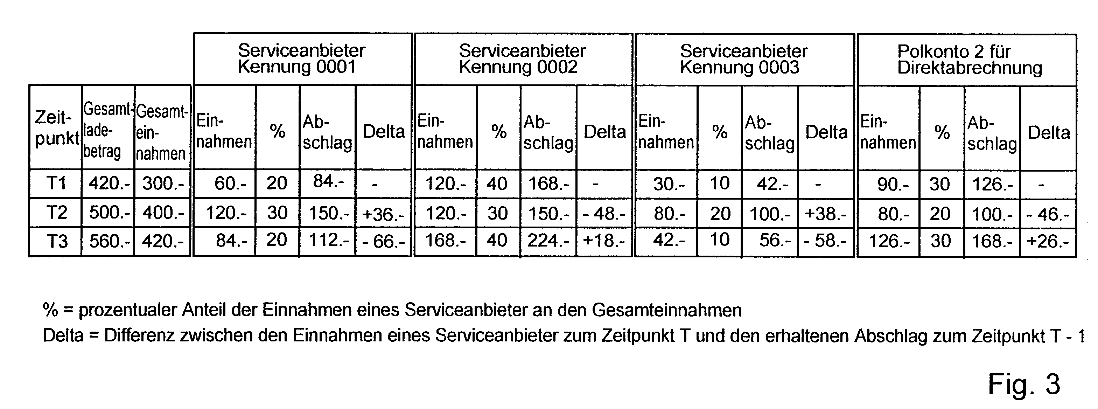

Für die Abrechnung mit den einzelnen Serviceanbietern müssen die im zweiten Teil des Ladedatensatzes enthaltenen Kennungen der Serviceanbieterkonten mit den jeweiligen Einnahmen ausgewertet werden. Im Abrechnungszentrum ist für jeden am System beteiligten Serviceanbieter unter seiner Kennung ein Konto angelegt (siehe Fig. 3). Hinzu kommt das Konto für die Direktabrechnung. Im aktuellen Beispiel der Fig. 3 gibt es drei Serviceanbieterkonten mit den Kennungen 0001, 0002, 0003. Auf diesen Konten wird der jeweilige Einnahmebetrag gutgeschrieben. So haben der Serviceanbieter 0001 im Abrechnungszeitraum T1 bis T2 Einnahmen in Höhe von 120,-- DM erzielt. Serviceanbieter 0002 hat 120,-- DM und Serviceanbieter 0003 hat ebenfalls 80,-- DM eingenommen. Die Einnahmen aus den Bezahldatensätzen für die Direktabrechnung betrugen 80,-- DM. Innerhalb des Abrechnungszeitraumes (T1 bis T2) sammeln sich auf den jeweiligen Serviceanbieterkonten und dem Direktabrechnungskonto die Einnahmesummen aller in diesem Zeitraum ausgewerteten Ladedatensätze und Bezahldatensätze. Zum Zeitpunkt T2 bildet das Abrechnungszentrum die Summe der Einnahmen aller Serviceanbieterkonten inclusive Direktabrechnungskonto (Gesamteinnahmen = 400,-- DM) und ermittelt den jeweiligen prozentualen Anteil des einzelnen Serviceanbieters an den Gesamteinnahmen (Serviceanbieter 0001 = 30%, Serviceanbieter 0002 = 30%, Serviceanbieter 0003 = 20%, Direktabrechnungskonto = 20%). Entsprechend des jeweiligen prozentualen Anteiles wird nun der Gesamtladebetrag zum Zeitpunkt T2 auf die Serviceanbieter aufgeteilt und als Abschlag ausbezahlt (Serviceanbieter 0001 = 150,-- DM, Serviceanbieter 0002 = 150,-- DM, Serviceanbieter 0003 = 100,-- DM). Der Abschlag für die Direktabrechnung in Höhe von 100,-- DM wird auf das Poolkonto 2 überwiesen. Im nächsten Schritt wird nun die Differenz zwischen dem Abschlag jedes Serviceanbieters zum Zeitpunkt T1 und den Einnahmen zum Zeitpunkt T2 gebildet (Serviceanbieter 0001 = +36,-- DM, Serviceanbieter 0002 = -48,-- DM, Serviceanbieter 0003 = +38,-- DM, Direktabrechnung = -46,-- DM). Ein positiver Betrag wird den Serviceanbietern bzw. dem Poolkonto 2 zusätzlich vergütet. Ein negativer Betrag muß vom Serviceanbieter erstattet werden, bzw. sein Abschlag wird entsprechend gekürzt. Somit ist jetzt eine Feinabrechnung für die zum Zeitpunkt T1 gezahlten Abschläge erfolgt. Die Feinabrechnung wurde auf Grundlage nahezu aller tatsächlich gemachten Einnahmen gemacht, mit Ausnahme der gesammelten Einnahmen auf den Börsen, die im Zeitraum T1 bis T2 nicht wieder aufgeladen wurden. Diese Einnahmen werden aber in einem späteren Abrechnungszeitraum erfaßt, sobald diese Börsen wieder aufgeladen werden. Da auf der Grundlage der tatsächlichen Einnahmen der prozentuale Anteil für den Abschlag immer wieder korrigiert wird, wird im Laufe der Zeit das Delta zwischen Abschlag und Feinabrechnung auf ein Minimum reduziert. Darüberhinaus wird es Chipkarten mit Börsen geben, die defekt sind, die verloren gehen oder die von ihren Eigentümern nach dem ersten Ausprobieren nicht mehr genutzt werden. Die auf diesen Karten gebuchten Einnahmen fließen nicht wieder in die Feinabrechnung ein, so daß sich im Laufe der Zeit auf dem Poolkonto ein Überschuß bilden wird. Dieser Überschuß wird dann jährlich einmal an alle Serviceanbieter inclusive Poolkonto 2 entsprechend ihres prozentualen Anteiles aufgeteilt.

## Patentansprüche

1. Verfahren zum Abrechnen elektronischer Geldbörsensysteme auf intelligenten Chipkarten, dadurch gekennzeichnet,
daß die Abrechnungsdaten der getätigten Bezahlvorgänge in der gleichen Chipkarte abgelegt werden, mit der auch bezahlt wurde,
daß die Chipkarte zu diesem Zweck die Kennung des Serviceanbieters, bei dem der Bezahlvorgang erfolgt und die Einnahme, die der Serviceanbieter bei diesem Bezahlvorgang erzielt, speichert,
daß von der Chipkarte für jeden Serviceanbieter, bei dem ein Bezahlvorgang erfolgt und dessen Kennung noch nicht in der Chipkarte gespeichert ist, eine Kennung in der Chipkarte angelegt wird, unter der die Einnahme des Serviceanbieters, die er bei dem Bezahlvorgang erzielt, gebucht wird,
daß von der Chipkarte für jeden Serviceanbieter bei dem ein Bezahlvorgang erfolgt und dessen Kennung bereits auf der Chipkarte gespeichert ist, die Einnahme, die der Serviceanbieter bei dem Bezahlvorgang erzielt zu der Einnahme, die bereits unter dieser Kennung abgelegt ist, addiert,
daß beim Laden der elektronischen Geldbörse Ladedatensätze von der Chipkarte zu einer Abrechnungsstelle übertragen werden, die zusammen mit einer Identifikationsnummer der Chipkarte sowohl die geladenen Beträge, als auch alle Kennungen mit den dazugehörigen Einnahmen enthalten,
daß unmittelbar nach dem Übertragen dieser Daten sowohl die Kennungen als auch die Einnahmen von der Chipkarte zurückgesetzt werden,
daß die Abrechnungsstelle aus ihren Stammdaten mit Hilfe der Identifikationsnummern der Chipkarte die Kontoverbindung des Karteninhabers ermittelt und den Ladebetrag vom Konto des Karteninhabers auf ein Poolkonto transferiert,
daß die Abrechnungsstelle aus allen, während eines Zeitraumes T bis T+1 erhaltenen Ladedatensätzen, die Summe der geladenen Beträge (Gesamtladebetrag) und die Summe aller Einnahmen bildet,
daß die Abrechnungsstelle den prozentualen Anteil jedes Serviceanbieters an den Gesamteinnahmen ermittelt,
daß die Abrechnungsstelle den Gesamtladebetrag entsprechend ihres prozentualen Anteiles an den erzielten Gesamteinnahmen als Abschlag an die Serviceanbieter verteilt,
daß die Abrechnungsstelle die Differenz zwischen den Einnahmen jedes Serviceanbieters im Abrechnungszeitraum T bis T+1 und dem erhaltenen Abschlag auf die im Abrechnungszeitraum T-1 bis T erzielten Gesamtladebeträge bildet,
daß die Abrechnungsstelle den Serviceanbietern einen positiven Betrag erstattet, bzw. einen negativen Betrag von den Serviceanbietern einzieht,
daß die Abrechnungsstelle optional Überschußbeträge, die sich auf dem Poolkonto 1 sammeln, entsprechend des prozentualen Anteils an den Gesamteinnahmen an die Serviceanbieter verteilt.

2. Verfahren nach Patentanspruch 1, dadurch gekennzeichnet,
daß alternativ die kompletten Transaktionsdatensätze eines Bezahlvorganges unter der jeweiligen Serviceanbieterkennung in der Chipkarte gespeichert werden.

3. Verfahren zum Abrechnen elektronischer Geldbörsensysteme auf intelligenten Chipkarten, dadurch gekennzeichnet,
daß Serviceanbieter, die die an ihren Terminals erfolgten Bezahlvorgänge direkt abrechnen wollen, die Bezahldatensätze bei der Abrechnungsstelle einreichen,
daß den Serviceanbietern die Einnahmen aus diesen Bezahldatensätzen von einem Poolkonto 2 zugewiesen werden,
daß die Abrechnungsstelle aus allen Bezahldatensätzen für die Direktabrechnung und Ladedatensätzen, die während eines Zeitraumes T bis T+1 eingegangen sind, die Summe aller Einnahmen und aus allen Ladedatensätzen die Summe der geladenen Beträge (Gesamtladebetrag) bildet,
daß die Abrechnungsstelle den prozentualen Anteil jedes Serviceanbieters und den prozentualen Anteil der Direktabrechnung an den Gesamteinnahmen ermittelt,
daß die Abrechnungsstelle den Gesamtladebetrag entsprechend des prozentualen Anteiles an den erzielten Gesamteinnahmen als Abschlag an die Serviceanbieter und auf ein Poolkonto 2 verteilt,
daß die Abrechnungsstelle die Differenz zwischen den Einnahmen jedes Serviceanbieters und den Einnahmen der Direktabrechnung im Abrechnungszeitraum T bis T+1 und dem erhaltenen Abschlag auf die im Abrechnungszeitraum T-1 bis T erzielten Gesamtladebeträge bildet,
daß die Abrechnungsstelle den Serviceanbietern und dem Poolkonto 2 einen positiven Betrag erstattet, bzw. einen negativen Betrag von den Serviceanbietern oder dem Poolkonto 2 einzieht,
daß die Abrechnungsstelle optional Überschußbeträge, die sich auf dem Poolkonto 1 sammeln, entsprechend des prozentualen Anteils an den_Gesamteinnahmen an die Serviceanbieter und das Poolkonto 2 verteilt.

4. Verfahren zum Abrechnen elektronischer Geldbörsensysteme auf intelligenten Chipkarten, dadurch gekennzeichnet,
daß neben den vorhandenen Feldern im programmierbaren Bereich der intelligenten Chipkarte ein zusätzliches Datenfeld (EF-Konten) angeordnet ist, in dem für die Serviceanbieter eigene Records angelegt und verwaltet werden, die jeweils die Kennung und die Einnahmen des jeweiligen Serviceanbieters beinhalten.

## Claims

1. Accounting method for electronic purse systems on smart cards,
characterized
in that the accounting data for the payment operations carried out is stored on the same smart card as that which was used for payment,
in that, for this purpose, the smart card stores the identifier for the service provider with whom the payment operation is carried out and the revenue obtained by the service provider from this payment operation,
in that, for each service provider with whom a payment operation is carried out and whose identifier is not yet stored on the smart card, the smart card sets up an identifier on the smart card, under which the service provider's revenue obtained from the payment operation is logged,
in that, for each service provider with whom a payment operation is carried out and whose identifier is already stored on the smart card, the smart card adds the revenue obtained by the service provider from the payment operation to the revenue already stored under this identifier,
in that, when the electronic purse is loaded, loaded data records, which contain, together with an identification number for the smart card, both the loaded amounts and all the identifiers with the associated revenues, are transferred from the smart card to an accounting point,
in that, as soon as this data has been transferred, both the identifiers and the revenues are reset by the smart card,
in that the accounting point uses the identification numbers for the smart card to ascertain the card holder's account details from its master data and transfers the loaded amount from the card holder's account to a pool account,
in that the accounting point forms the sum of the loaded amounts (total loaded amount) and the sum of all the revenues from all the loaded data records received during a period T to T+1,
in that the accounting point ascertains each service provider's percentage share of the total revenues,
in that the accounting point distributes the total loaded amount to the service providers as a deduction on the basis of their percentage share of the total revenues obtained,
in that the accounting point forms the difference between the revenues of each service provider over the accounting period T to T+1 and the deduction received on the total loaded amounts obtained over the accounting period T-1 to T,
in that the accounting point repays a positive amount to the service providers or takes a negative amount from the service providers,
in that the accounting point optionally distributes excess amounts collecting in the pool account 1 to the service providers on the basis of the percentage share of the total revenues.

2. Method according to Patent Claim 1, characterized
in that the full transaction data records for a payment operation are stored under the respective service provider identifier on the smart card as an alternative.

3. Accounting method for electronic purse systems on smart cards, characterized
in that service providers wishing to debit the payment operations carried out at their terminals directly submit the payment data records to the accounting point,
in that the service providers are allocated the revenues from these payment data records from a pool account 2,
in that the accounting point forms the sum of all the revenues from all the payment data records for direct debiting and from loaded data records entered during a period T to T+1 and forms the sum of the loaded amounts (total loaded amount) from all the loaded data records,
in that the accounting point ascertains each service provider's percentage share and the direct debiting's percentage share of the total revenues,
in that the accounting point distributes the total loaded amount to the service providers and to a pool account 2 as a deduction on the basis of the percentage share of the total revenues obtained,
in that the accounting point forms the difference between the revenues of each service provider and the revenues from direct debiting over the accounting period T to T+1 and the deduction received on the total loaded amounts obtained over the accounting period T-1 to T,
in that the accounting point repays a positive amount to the service providers and to the pool account 2 or takes a negative amount from the service providers or from the pool account 2,
in that the accounting point optionally distributes excess amounts collecting in the pool account 1 to the service providers and to the pool account 2 on the basis of the percentage share of the total revenues.

4. Accounting method for electronic purse systems on smart cards,
characterized
in that, in addition to the existing fields in the programmable area of the smart card, there is an additional data field (EF accounts) in which dedicated records are set up and managed for the service providers, said records each containing the identifier and the revenues of the respective service provider.

## Revendications

1. Procédé de décompte de systèmes de porte-monnaie électroniques sur des cartes à puce intelligentes, caractérisé en ce que :
les données de décompte des opérations de paiement effectuées sont stockées sur la même carte à puce avec laquelle les paiements ont également été effectués,
la carte à puce mémorise à cette fin l'identité du fournisseur de services, auprès duquel l'opération de paiement est effectuée, et la recette que le fournisseur de services reçoit lors de cette opération de paiement,
la carte à puce, pour chaque fournisseur de services auprès duquel une opération de paiement est effectuée et dont l'identité n'est pas encore mémorisée dans la carte à puce, fournit dans la carte à puce une identité sous laquelle la recette du fournisseur de services, qu'il reçoit lors de l'opération de paiement, est comptabilisée,
la carte à puce, pour chaque fournisseur de services auprès duquel une opération de paiement est effectuée et dont l'identité est déjà mémorisée sur la carte à puce, ajoute la recette, que le fournisseur de services reçoit lors de l'opération de paiement, à la recette qui a déjà été stockée sous cette identité,
lors du chargement du porte-monnaie électronique, des séries de données de chargement sont transmises de la carte à puce à un organisme de décompte, qui, conjointement avec un numéro d'identification de la carte à puce, contiennent autant les montants chargés que toutes les identités ayant trait aux recettes correspondantes,
directement après le transfert de ces données, autant les identités que les recettes de la carte à puce sont remises à zéro,
l'organisme de décompte établit, à partir de ses données permanentes, à l'aide des numéros d'identification de la carte à puce, la liaison au compte du titulaire de la carte et transfère le montant de chargement du compte du titulaire de la carte à un compte commun,
l'organisme de décompte forme, à partir de toutes les séries de données de chargement reçues au cours d'un intervalle de temps T à T+1, la somme des montants chargés (montant de chargement total) et la somme de toutes les recettes,
l'organisme de décompte détermine le pourcentage sur les recettes totales de chaque fournisseur de services,
l'organisme de décompte distribue le montant de chargement total conformément à son pourcentage sur les recettes totales obtenues en tant que déduction aux fournisseurs de services,
l'organisme de décompte forme la différence entre les recettes de chaque fournisseur de services dans l'intervalle de temps de décompte T à T+1 et la déduction reçue sur les montants de chargement totaux obtenus dans l'intervalle de temps de décompte T-1 à T,
l'organisme de décompte rembourse aux fournisseurs de services un montant positif ou encaisse un montant négatif auprès des fournisseurs de services, et
l'organisme de décompte distribue éventuellement aux fournisseurs de services des montants excédentaires, qui s'accumulent sur le compte commun 1, conformément au pourcentage sur les recettes totales.

2. Procédé selon la revendication 1, caractérisé en ce que :
en variante, les séries de données de transaction complètes d'une opération de paiement sont mémorisées dans la carte à puce sous l'identité respective du fournisseur de services.

3. Procédé de décompte de systèmes de porte-monnaie électroniques sur des cartes à puce intelligentes, caractérisé en ce que :
les fournisseurs de services, qui veulent directement établir un décompte des opérations de paiement effectuées sur leurs terminaux, fournissent les séries de données de paiement à l'organisme de décompte,
les recettes provenant de ces séries de données de paiement sont attribuées aux fournisseurs de services par un compte commun 2,
l'organisme de décompte forme, à partir de toutes les séries de données de paiement pour le décompte direct et des séries de données de chargement qui sont saisies au cours d'un intervalle de temps T à T+1, la somme de toutes les recettes et, à partir de toutes les séries de données de chargement, la somme des montants chargés (montant de chargement total),
l'organisme de décompte détermine le pourcentage de chaque fournisseur de services et le pourcentage de décompte direct sur les recettes totales,
l'organisme de décompte distribue le montant de chargement total conformément au pourcentage sur les recettes totales obtenues en tant que déduction aux fournisseurs de services et sur un compte commun 2,
l'organisme de décompte forme la différence entre les recettes de chaque fournisseur de services et les recettes du décompte direct dans l'intervalle de temps de décompte T à T+1 et la déduction reçue sur les montants de chargement totaux obtenus dans l'intervalle de temps de décompte T-1 à T,
l'organisme de décompte rembourse aux fournisseurs de services et au compte commun 2 un montant positif ou encaisse un montant négatif venant des fournisseurs de services ou du compte commun 2, et
l'organisme de décompte distribue éventuellement aux fournisseurs de services et au compte commun 2 des montants excédentaires qui s'accumulent sur le compte commun 1, conformément au pourcentage sur les recettes totales.

4. Procédé de décompte de systèmes de porte-monnaie électroniques sur des cartes à puce intelligentes, caractérisé en ce que :
à côté des champs présents dans la zone programmable de la carte à puce intelligente, on agence un champ de données supplémentaire (comptes EF) dans lequel sont apposés et gérés des enregistrements propres aux fournisseurs de services, qui contiennent à chaque fois l'identité et les recettes du fournisseur de services respectif.
